# EUROPEAN PATENT APPLICATION

(11) **EP 3 147 153 A1**
(43) Date of publication of application: **29.03.2017**
(21) Application number: 15425097.1
(22) Date of filing: 13.11.2015
(51) Int. Cl.: B60L 11/18

(54) **MOBILE DEVICE FOR CONTROLLING THE CHARGING OF ELECTRIC VEHICLES**

(30) Priority: 28.09.2015 IT UB20153976
(71) Applicant: ROUTE220 Srl, 20125 Milan (IT)
(72) Inventor: Barbieri, Franco, 20836 Briosco (MB) (IT); Cattaneo, Stefano, 11016 La Thuile (AO) (IT)
(74) Representative: Pola, Marco Maria

(57) **Abstract**

Mobile device (100) for controlling the charging of electric vehicles, comprising: a first communication module (110) to for establishing a short-range wireless communication with a charging station (EVSE); a processing unit (120) configured for: sending a first operating signal (OS1) to said charging station (EVSE), via said first communication module (110), for enabling a charging of an electric vehicle (EV); sending a second operating signal (OS2) to said charging station (EVSE), via said first communication module (110), for ending said recharging.

## Description

The present invention relates to a mobile device for controlling the charging of electric vehicles.

The present invention is also directed to a management apparatus, installed locally at a charging station, for controlling the charging of electric vehicles.

As is known, vehicles provided with electric motors, in particular motor vehicles, are spreading significantly.

Electric motors mounted on such vehicles are associated with appropriate batteries, which have the task of supplying the motors themselves.

It is well known that batteries need to be recharged.

Charging stations are distributed on the territory from which it is possible to absorb, with variable modes, the energy required for charging.

Currently, charging stations can be used against the recognition, by the station itself, of a card (totally similar to a credit card), which the user must first procure. The use of other modes of access to charging stations is also known, for example by means of actual keys.

Since the charging stations are controlled by different operators, a user is currently forced to procure a plurality of cards (and/or keys or other suitable objects/devices) in order to ensure the ability to recharge the vehicle during a trip.

This scenario is clearly little convenient to those who need to recharge their vehicle.

More advanced systems based on the use of mobile devices (smartphones) and wireless technologies are also known.

In particular, U.S. patent application 2012/0221473 A1 describes a system in which the user must perform the following steps in order to perform a recharge:
1. subscribe to an online service;
2. reserve a charging at a certain station;
3. prepay the charging.

The system responds by sending a data package to the user's mobile device which includes: date, time and duration of the charge.

When the user goes to the selected station, the smartphone provides the data received during the reservation process to the control device of the station itself. In this way, the station is able to dispense power according to the preset data.

The Applicant has observed that this type of systems has a number of drawbacks:
a. a reservation system is extremely difficult to implement, since often those who charge their vehicle do not move it immediately after charging, thus preventing other users, with following reservations, to bring their own vehicle at the charging station;
b. the reservation system is in any case intricate, complex and binding; moreover, it does not allow making unscheduled charging, thus creating problems to users facing unforeseen situations;
c. all data related to charging, including duration, are set at the time of reservation. This, once again, prevents users from making recharges of duration other than expected, or forces them to make recharges of shorter duration compared with what already paid.

The object of the present invention therefore is to provide a control device capable of overcoming the above drawbacks.

In particular, the object of the invention is to provide a control device able to replace all proprietary cards (and/or keys and/or other proprietary devices) necessary to access stations controlled by different operators.

A further object of the invention is to provide a control device that allows users to recharge their vehicle with elasticity and, at the same time, with simplicity, without imposing substantial prior constraints.

Another object of the invention is to propose a control device which allows to implementing/installing stand-alone charging stations, i.e. not connected to the Internet.

These and other objects substantially are achieved by a device as described in the accompanying claims.

Further features and advantages will appear more clearly from the description of a preferred and non-exclusive embodiment of the invention.

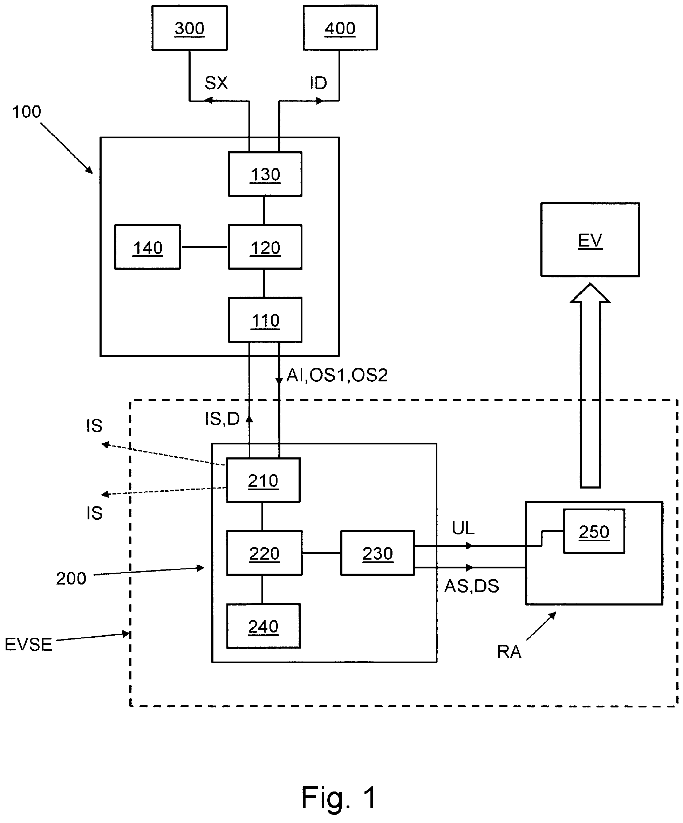

Such a description is provided hereinafter with reference to the accompanying figure 1, also having a purely exemplifying and non limiting purpose, which shows a block diagram representing the present invention.

With reference to the accompanying drawings, reference numeral 100 globally indicates a mobile device for controlling the charging of electric vehicles. Reference numeral 200 instead indicates a management apparatus, installed locally at a charging station EVSE, for controlling the charging of electric vehicles.

The charging station EVSE comprises, in a per se known manner, a charging apparatus RA, adapted to deliver, in a controlled manner, electrical energy for charging electric vehicles.

In the block diagram in figure 1, EV generally indicates an electric vehicle which can be charged through the charging station EVSE.

The electric vehicle EV can be any vehicle provided with an electric motor drive, such as a motor vehicle or a motorcycle.

Since the charging apparatus RA is well known, it is not described in further detail herein.

According to the invention, a management apparatus 200 is locally installed at the charging station EVSE, which has the main task to of managing the delivery of electric power to vehicles EV that can be connected to the charging station EVSE.

Advantageously, the management apparatus 200 communicates with a mobile control device 100 for implementing a suitable adjustment of the charging process.

The management apparatus 200 comprises a connection module 210 for establishing short-range wireless communications.

Merely by way of example, the connection module 210 can use the Bluetooth® technology or any other technology suitable for establishing proximity wireless connections.

Apparatus 200 further comprises a processing module 220.

The processing module 220 may be, for example, an electronic device or circuit, made with any suitable technique, suitable for carrying out the operations that will be described hereinafter.

The processing module 220 is associated, via an appropriate interface 230, to the charging apparatus RA. Merely by way of example, interface 230 may consist of a wired connection, in particular of the RS485, RS232 type or any other connection (typically serial) for the transmission of data at short range.

The processing module 220 is connected to the connection module 210.

Preferably, the processing module 220 is configured to periodically send, via the connection module 210, an initial signal IS.

The initial signal IS is generated and sent without having established any dedicated connection with other devices. It is a sort of broadcast transmission, in which the initial signal IS is transmitted and can be received by any device provided with appropriate connectivity and within a certain surrounding of the connection module 210.

By way of example, the initial signal IS can be transmitted with a frequency between 1 and 10 times per second, preferably on a carrier of 13.56 MHz or 2.45 GHz, so as to be compatible with the NFC and Bluetooth® protocols, respectively. Preferably, the initial signal IS comprising an identification code ID associated to apparatus 200 (i.e., to the charging station EVSE).

In the practice, apparatus 200 signals its presence in a substantially continuous manner to the benefit of any devices that may be in the vicinity for activating a charging of an electric vehicle EV.

As will be more apparent hereinafter, apparatus 200 can be configured to provide the users of electric vehicles with targeted information, for example of an advertising nature.

The mobile device 100 comprises a first communication module 110 for establishing short-range wireless communications.

Merely by way of example, the first communication module 110 can use the Bluetooth® technology or any other technology suitable for establishing proximity wireless connections.

Advantageously, the first communication module 110 of the mobile device 100 and the connection module 210 of apparatus 200 use the same technology, so as to be able to communicate with each other.

Preferably, the mobile device 100 further comprises a second communication module 130 for establishing long-range wireless communications. Merely by way of example, the second communication module 130 may use GSM, UMTS, LTE, LTE-A, etc. In the practice, the second communication module 130 has the task of connecting the mobile device 100 to the Internet.

The mobile device 100 further comprises a processing unit 120, associated with the first communication module 110.

The mobile device 110 can be, in practice, a new generation mobile phone (smartphone), a tablet, a portable computer, a so-called smartwatch, an electronic device integrated in a clothing item and/or suitable to be carried/worn by a user, etc. appropriately configured and programmed to perform the operations that will be described hereinafter.

In particular, in the case of smartphone or tablet, the installation of a suitable software application (so-called "app") is provided.

When device 100 is in the vicinity of apparatus 200, the processing module 120 receives the initial signal IS via the first communication module 110. In response to this signal, a short-range wireless connection is established between the control device 100 and the management apparatus 200. On the basis of such a short-range wireless connection, the processing unit 120 sends authentication information AI to the processing module 220.

The authentication information AI is used by the processing module 220 to verify whether device 100 is enabled to request a recharge for an electric vehicle.

In the practice, the authentication mechanism can be based on public keys/private keys to allow a mutual authentication between the mobile device 100 and the management apparatus 200.

Preferably, apparatus 200 includes a memory 240 wherein at least the identification code ID and data necessary for authentication based on the authentication information AI are stored.

Once the authentication step has successfully completed, device 100 may require to apparatus 200, and thus to the charging station EVSE, a charging for an electric vehicle EV, which meanwhile has been connected to station EVSE.

To this end, the processing unit 120 sends, via the first communication module 110, a first operating signal OS1.

The processing module 220 receives, via the connection module 210, the first operating signal OS and generates an activation signal AS, so that the charging apparatus RA starts supplying electric power vehicle EV.

For example, the activation signal AS can be sent to the charging apparatus RA via interface 230.

The charging of vehicle EV is then started.

When the charging must be ended (or interrupted), the processing unit 120 sends, via the first communication module 110, a second operating signal OS2.

Note that the second operating signal OS2 can be sent to station EVSE also by a device different from (that is, "other than") said mobile device 100, provided it is enabled to interrupt others' charging; it might be necessary, for example, for maintenance or safety issues, to disconnect vehicle EV from the EVSE in the absence of the owner (i.e., the user of the mobile device 100).

The processing module 220, via the connection module 210, receives the second operating signal OS2 and ends (or stops) the charging of vehicle EV. For example, the processing module 220 may send, to this end, a deactivation signal DS to the charging apparatus RA, preferably via interface 230.

Note that the first operating OS1 and the second operating signal OS2 are sent at two distinct times: the first operational signal OS1 is sent before that charging begins, in order to activate said charging; the second operating signal OS2 is sent when the charging is already in progress, in order to end or interrupt the charging itself. In particular, the charging is interrupted or ended as soon as the second operating signal OS2 is received by the processing module 220.

It should also be noted that the first operating signal OPS1 and the second operating signal OS2 can be sent in two separate communication sessions: once the first operating signal OS1 has been sent, the mobile device 100 can also be moved away from the charging station EVSE, and thus from the management apparatus 200, out of range of the connection module 210. In other words, the connection between device 100 and apparatus 200 is interrupted; for example, the owner of vehicle EV decides to move away from the charging station EVSE, bringing their smartphones (i.e. the mobile device 100) with them to perform some errands. When later the user returns near the charging station EVSE, the mobile device 100 again receives the initial signal IS (which apparatus 200 has not stopped emitting) and establishes a new connection after the authentication. The processing unit 120 may now send, via the first communication module 110, the second operating signal OS2, so that the processing module 220 may stop or end the charging through the deactivation signal DS.

Preferably, the processing unit 120 is configured to access, as a function of the identification code ID sent by the processing module 220, to remotely stored contents.

Preferably, such access is carried out via the long-range connectivity made available by the second communication module 130.

In particular, the software loaded in the processing unit 120 operates so that the mobile device 100 automatically connects to a given remote server 400, in which preset tables are stored that, according to the ID received, return a web address at which information can be retrieved.

For example, this technique can be used for the so-called "proximity marketing": the preset tables on the remote server 400 allow the mobile device 100 to access contents related to the local context in which the charging station EVSE is located. In addition to advertising information (promoting, for example, businesses in the area) tourism information may also be provided to the mobile device 100, suggesting sites of historical/artistic interest to the user of the mobile device 100 itself.

After charging, the processing module 220 generates and transmits data D, representing at least the charging, to the mobile device 100 via the connection module 210.

In particular, data D may include:
- information representative of the duration of charging, such as the start time and the end time of the charging itself;
- information representative of the total energy consumption.

Advantageously, data D further comprise the identification code ID.

The processing unit 120 receives data D via the first communication module 110 and generates a corresponding debit signal SX to cause a debiting upon charging.

In particular, the debit signal SX is sent to a remote management system 300, preferably via the second communication module 130.

Note that, in one embodiment, the information content of the debit signal SX may be substantially the same compared to that of data D; in this case, the remote management system 300 deals with the processing necessary for determining the total amount to be charged to the user.

Advantageously, the data D sent by the processing module 220 are stored by the processing unit 120 in a memory area 140 associated thereto and comprised in device 100. In this way, it is possible to delay the transmission of the debit signal SX if a long-range connectivity is not immediately available (e.g. if the user is at a charging station EVSE installed in an underground parking).

Note that apparatus 200 can be incorporated in the native control board of the charging station EVSE, or it can also be added later as a separate device, suitably adapted to communicate with the native electronic card of station EVSE itself.

Advantageously, apparatus 200 is not provided with long-range connectivity. In other words, apparatus 200 preferably does not have Internet access. Apparatus 200 only connects to the mobile device 100 via short-range wireless connection, and with the charging apparatus RA via interface 230. In fact, the invention uses the long-range connectivity of the mobile device 100, provided by the second communication module 130, to send the necessary information (e.g. debit data) to the remote system management. In this way, the installation of the charging station EVSE is greatly simplified, and the invention can be applied with ease also to already existing plants.

In one embodiment, the processing unit 120 can be configured to:
- estimate a recharge time of vehicle EV;
- generate a notification message, once said estimated charging time has elapsed.

The notification message, which can be for example of the sound and/or visual type, has the task of reminding the user that the vehicle's charging has been completed or is about to end.

In this way, the probability that the user occupies the position at station EVSE with his vehicle EV for too long a time compared to the actual charging length, is reduced.

Preferably, the charging time is estimated based on data provided by vehicle EV itself, if the latter is provided with suitable connectivity: the on-board processor, once vehicle EV has been connected to the recharge cable of station EVSE, can provide the mobile device 100 with all the information necessary to estimate the charging time (i.e. the maximum charging amount that may be carried out and recharging rate allowed by the station).

In one embodiment, the charging station EVSE is provided with a locking device 250, which has the task of preventing the plug used to recharge vehicle EV from being extracted from the respective socket. Advantageously, the processing module 220 (or, more generally, the management apparatus 200) may be configured to generate an unlock signal UL at the end of charging. In this way, other users are allowed to disconnect the power cord of any vehicle already charged and connect theirs.

In one embodiment, the management apparatus 200 can be configured to be part of a network to which a number of different charging stations of vehicles and different electric utilities are connected. Such electric utilities can also include, for example, civil and/or industrial systems.

It is expected that a central management unit periodically checks the energy requirements from various utilities. In the case of demand peaks (e.g. electric networks of offices in very hot summer days, in which conditioning systems are kept on for prolonged periods and at high intensity), the central management unit draws energy from the vehicles connected to the charging stations EVSE and make it available to the utilities. After the peak period, the charging of vehicles EV can be done/completed by drawing energy from the network in the usual manner.

The invention therefore achieves important advantages.

Firstly, the invention makes allows replacing all the proprietary cards currently required to access stations controlled by different operators, facilitating access to recharges by the owners of electric vehicles.

Another advantage consists in that the invention allows users to recharge their vehicle with elasticity and, at the same time, with simplicity, without imposing substantial prior constraints.

A further advantage is found considering that since the charging station is not connected to the Internet, savings are achieved both in terms of reduction and of simplification of the hardware, and in terms of simplicity and speed of installation.

## Claims

1. Mobile device (100) for controlling the charging of electric vehicles, comprising:
- a first communication module (110) for establishing a short-range wireless communication with a charging station (EVSE);
- a processing unit (120) configured for:
sending a first operating signal (OS1) to said charging station (EVSE), via said first communication module (110) for enabling a charging of an electric vehicle (EV);
sending a second operating signal (OS2) to said charging station (EVSE), via said first communication module (110) for ending said charging.

2. Device according to claim 1, wherein said processing unit (120) is configured for sending said second operating signal (OS2) after said charging has begun.

3. Device according to claim 1 or 2, wherein said processing unit (120) is configured for:
- receiving, through said first communication module (110), an initial signal (IS) from said charging station (EVSE);
- sending authentication information (AI) in response to said initial signal (IS) to said charging station (EVSE), via said first communication module (110).

4. Device according to anyone of the preceding claims, further comprising a second long-range communication module (130), said processing unit (120) being configured for:
- receiving, through said first communication module (110), an identification code (ID) from said charging station (EVSE);
- accessing, based on said identification code (ID), to certain contents via said second communication module (130).

5. Device according to anyone of the preceding claims, wherein said processing unit (120) is further configured for:
- receiving data (D) descriptive of the charging from said charging station (EVSE) at the end of said charging via said first communication module (110).
- generating a debit signal (SX) for causing a charging debit.

6. Method for managing the recharge of an electric vehicle, comprising:
- establishing a short-range wireless communication with a charging station (EVSE);
- sending a first operating signal (OS1) to said charging station (EVSE) for enabling a charging of an electric vehicle (EV) ;
- sending a second operating signal (OS2) to said charging station (EVSE) for ending said charging.

7. Software program comprising instructions which, when said software program is loaded into a processing unit (120) of a mobile device (100), cause the execution of the method according to claim 6.

8. Management apparatus (200), suitable for being installed locally at a charging station (EVSE) for electric vehicles for controlling the recharging of electric vehicles, said apparatus comprising:
- a connection module (210) for establishing short-range wireless communications;
- a processing module (220) configured for:
receiving a first operating signal (OS1) from a mobile control device (100) via said connection module (210);
following the reception of said first operating signal (OS1), generating an activation signal (AS) for enabling the recharging of an electric vehicle (EV);
receiving a second operating signal (OS2) from said mobile control device (100) via said connection module (210) for ending said recharging;
following the reception of said second operating signal (OS2), generating a deactivation signal (DS) for ending the recharging of said electric vehicle (EV).

9. Apparatus according to claim 8, wherein said second operating signal (OS2) is received after said charging has begun.

10. Apparatus according to claim 8 or 9, wherein said processing module (220) is configured for periodically sending, via said connection module (210), an initial signal (IS), preferably comprising an identification code (ID) associated with said apparatus (200).

11. Apparatus according to claim 10, wherein said processing module (220) is configured for receiving, via said connection module (210), authentication information (AI) in response to said initial signal (IS), said authentication information (AI) being suitable for an authentication of said mobile device (100).

12. Apparatus according to anyone of claims 8 to 11, wherein said processing module (220) is configured for sending, via said connection module (210), data (D) descriptive of said charging at the end of the charging.

13. Apparatus according to anyone of claims 8 to 12, wherein said apparatus (200) is not connected to the Internet.

14. Apparatus according to anyone of claims 8 to 13, wherein said processing module (200) is configured for generating an unlock signal (UL) at the end of charging of the vehicle (EV) to allow unlocking of the wired charging connection between said vehicle (EV) and a recharging apparatus (RA) associated with said management apparatus (200).

15. Method of managing a charging station (EVSE) for electric vehicles, including:
- establishing a short-range wireless communication with a mobile control device (100);
- receiving a first operating signal (OS1) from said mobile control device (100);
- following the reception of said first operating signal (OS1), generating an activation signal (AS) for enabling the recharging of an electric vehicle (EV);
- receiving a second operating signal (OS2) from said mobile device (100) for ending said charging;
- following the reception of said second operating signal (OS2), generating a deactivation signal (DS) for ending the recharging of said electric vehicle (EV).

16. Software program comprising instructions which, when said software program is loaded into a processing unit of a management apparatus (200) locally installed at a charging station (EVSE) for electric vehicles, cause the execution of the method according to claim 15.

17. Charging station (EVSE) for electric vehicles, including:
- a charging apparatus (RA), suitable for delivering electric energy for charging electric vehicles;
- a management apparatus (200) according to any of claims 8 to 14.
